# FASCICULE DE BREVET EUROPEEN

(11) **EP 2 599 057 B1**
(45) Date de publication et mention de la délivrance du brevet: **31.05.2017**
(21) Numéro de dépôt: 11761401.6
(22) Date de dépôt: 29.07.2011
(51) Int. Cl.: G06T 11/00

(54) **SYSTEME ET PROCEDE D'EDITION, D'OPTIMISATION ET DE RENDU DE TEXTURES PROCEDURALES**
SYSTEM UND VERFAHREN ZUR BEARBEITUNG, OPTIMIERUNG UND DARSTELLUNG VON VERFAHRENSTECHNISCHEN TEXTUREN
SYSTEM AND METHOD FOR EDITING, OPTIMISING, AND RENDERING PROCEDURAL TEXTURES

(30) Priorité: 02.08.2010 US 369810 P; 30.07.2010 FR 1003204
(43) Date de publication de la demande: 05.06.2013
(73) Titulaire: Allegorithmic, 63000 Clermont-Ferrand (FR)
(72) Inventeur: DAMEZ, Cyrille, F- 63000 Clermont-Ferrand (FR); SOUM, Christophe, F- 63000 Clermont-Ferrand (FR)
(74) Mandataire: Gabriel, Franck
(86) Numéro de dépôt international: PCT/IB2011/001753
(87) Numéro de publication internationale: WO 2012/014057

(56) Documents cités:
- ALLEGORITHMIC: "Substance: Unleashing online gaming with descriptive textures", WHITE PAPER, mars 2009 (2009-03), pages 1-10, XP002662009,
- WIKIPEDIA: "Topological sorting", INTERNET CITATION, 26 janvier 2005 (2005-01-26), XP002386884, Extrait de l'Internet: URL:http://en.wikipedia.org/w/index.php?ti tle=Topological_sorting&oldid=9 966565 [extrait le 2006-06-21]
- MARK ATKINS AND HAIM BARAD AND OR GERLITZ AND DANIEL GOEHRING: "Real-Time Procedural Texturing Techniques Using MMX", INTERNET CITATION, mai 1998 (1998-05), XP001543218, Extrait de l'Internet: URL:http://www.gamasutra.com/features/1998 0501/mmxtexturing_01.htm [extrait le 1900-01-01]

## Description

### DOMAINE TECHNIQUE DE L'INVENTION

La présente invention concerne un système d'édition et de génération de textures procédurales permettant d'éditer des textures en format procédural et, à partir des données procédurales éditées, de générer des textures en format matriciel. Elle concerne plus particulièrement un procédé d'édition et un procédé de génération correspondants.

### ETAT DE LA TECHNIQUE ANTERIEURE

De nombreuses applications graphiques sont amenées à manier des quantités significatives de données consommant une place importante en mémoire et dont la manipulation nécessite un grand nombre de calculs complexes. De plus, certaines catégories d'applications graphiques interactives doivent autant que possible minimiser leurs temps de réponse afin de fournir une expérience utilisateur satisfaisante : jeux vidéo, simulateurs d'entraînement, logiciels d'édition ou de composition vidéo. Ces applications dédient une part importante des ressources à la manipulation d'images appelées « textures », qui représentent par exemple l'aspect de surface d'un objet, un décor de fond, ou bien des masques de composition. Les textures sont non seulement utilisées pour stocker des informations de couleurs, mais également tout autre paramètre utile à l'application. Dans un jeu vidéo les textures stockent typiquement les couleurs, les petits reliefs de surface, ainsi que les coefficients de réflexion des matériaux.

L'édition, le stockage et l'affichage de ces textures sont des problèmes clés pour les applications graphiques. Généralement, les textures sont peintes par des infographistes, parfois à partir de photographies. Une fois peinte, la texture a une résolution figée et il est très difficile de l'adapter à un autre contexte. Les applications utilisant de plus en plus de textures, il devient très coûteux de peindre à la main suffisamment de textures différentes et il n'est pas rare d'observer des répétitions à l'écran. De plus, les textures sont stockées sous forme de grilles de pixels (points de couleur), que nous appellerons « bitmaps » par la suite. Même après compression, il est très coûteux de stocker ces informations sur un média de masse type DVD ou disque dur, et très lent de les transférer via un réseau.

Bien entendu, certaines techniques ont été proposées pour répondre à ces difficultés, et en particulier la notion de texture procédurale. Selon cette approche, l'image est le résultat d'un calcul plutôt que peinte à la main. Sous certaines conditions, le calcul de l'image peut être effectué au dernier moment, juste avant l'affichage, limitant ainsi le besoin de stocker l'image entière. Il est également aisé d'introduire des variations dans les textures procédurales, évitant ainsi les répétitions. Cependant, les textures procédurales ne peuvent pas être facilement créées et manipulées par les infographistes, et leur utilisation reste limitée à quelques cas particuliers de matériaux. Malgré les nombreuses tentatives, aucun système n'a su offrir un outil complet permettant l'édition, la manipulation et l'affichage efficaces de textures procédurales. Le document « Substance : Unleashing online gaming with descriptive textures », white paper, mars 2009 (2009-03), pages 1-10, XP002662009 décrit un système d'édition et de génération de textures procédurales selon le préambule de la revendication 1.

Pour pallier ces différents inconvénients, l'invention prévoit différents moyens techniques.

### EXPOSE DE L'INVENTION

Tout d'abord, un premier objet de l'invention consiste à prévoir un dispositif d'édition et de génération de textures permettant une utilisation avec des application dans lesquels les rendus doivent être produits dans des temps très courts, voire en temps réel.

Un autre objet de l'invention consiste à prévoir un procédé d'édition permettant une utilisation avec des application dans lesquels les rendus doivent être produits dans des temps très courts, voire en temps réel.

Un autre objet de l'invention consiste à prévoir un procédé de rendu de textures permettant une utilisation avec des application dans lesquels les rendus doivent être produits dans des temps très courts, voire en temps réel.

Pour ce faire, l'invention propose un système d'édition et de génération de textures procédurales selon la revendication 1.

L'invention répond à l'ensemble des problèmes posés avec une chaîne complète allant de l'édition à la génération pour l'affichage de textures procédurales. L'outil d'édition encourage la réutilisation de morceaux d'images existants, et permet de générer une infinité de variations d'une texture de base. L'outil ne mémorise pas l'image finale, mais plutôt la description de l'image, c'est-à-dire les étapes successives qui permettent de la calculer. Dans l'immense majorité des cas, cette description est de taille très inférieure à l'image sous forme « bitmap ». De plus, la technologie de l'invention a été conçue pour permettre une génération rapide des images sous forme « bitmap » à partir de leurs descriptions. Les descriptions issues de l'éditeur sont préparées, via un composant appelé optimiseur pour accélérer leur génération par rapport à une stratégie naïve. Les applications n'ont besoin de connaître que ces descriptions retravaillées. Lorsque l'application souhaite utiliser une texture, elle demande au composant de génération appelé ou moteur de rendu, de convertir la description retravaillée en image « bitmap ». Par la suite l'image « bitmap » est utilisée comme une image classique. En ce sens, la technologie selon l'invention est minimalement invasive, puisque très simple à interfacer avec une application existante.

De manière avantageuse, les filtres comportent des données et des opérateurs mathématiques.

Selon un autre aspect, l'invention prévoit un procédé d'édition de textures procédurales selon la revendication 3.

### DESCRIPTION DES FIGURES

Tous les détails de réalisation sont donnés dans la description qui suit, complétée par les figures 1 à 10, présentées uniquement à des fins d'exemples non limitatifs, et dans lesquelles :
- les figures 1a et 1b illustrent les principales étapes en liaison avec l'édition, l'optimisation et la génération ou rendu de textures selon l'invention ;
- la figure 2 illustre un exemple d'emballage de sous-graphe et de réexposition de certains paramètres ;
- la figure 3 illustre un exemple de composition de textures à l'aide d'un masque ;
- la figure 4 illustre un exemple de transformation du graphe d'édition en liste ;
- la figure 5 montre un exemple de dispositif implémentant l'outil d'édition selon l'invention ;
- la figure 6 montre un exemple de gestion des interactions et des données de l'outil d'édition ;
- la figure 7 présente un exemple d'un optimiseur selon l'invention ;
- la figure 8 illustre un exemple de dispositif implémentant un moteur de rendu selon l'invention ;
- la figure 9 montre un exemple de parcours de liste utilisé par le moteur de rendu ;
- la figure 10 présente un exemple de graphe procédural édité par un système d'édition selon l'invention.

### DESCRIPTION DETAILLEE DE L'INVENTION

L'invention proposée représente les images sous forme de graphe. Chaque noeud du graphe applique une opération, ou filtre, sur une ou plusieurs images d'entrée (flou, déformation, changement colorimétrique, etc.) pour produire une ou plusieurs images de sortie. Chaque noeud possède des paramètres manipulables par l'utilisateur (intensité, couleur, entrée aléatoire, etc.). Le graphe lui-même possède également un certain nombre de paramètres manipulables par l'utilisateur, qui conditionnent toutes les images de sortie du graphe. Les paramètres spécifiques aux filtres ou communs à tout le graphe peuvent eux-mêmes être contrôlés à partir d'autres paramètres via des expressions arithmétiques définies par l'utilisateur. Certains noeuds génèrent directement des images à partir de leurs paramètres, sans « consommer » d'image en entrée. Lors de l'exécution du graphe, ce sont généralement les premiers noeuds à être calculés, permettant ainsi de fournir les images de bases qui seront progressivement retravaillées pour produire les images de sortie.

Le graphe d'édition est un graphe orienté acyclique (DAG, *Directed Acyclic Graph*) constitué de noeuds de trois sortes, « entrée », « composition », « sortie » :
- les noeuds de type « entrée » sont optionnels et sont utilisés pour concevoir un filtre sur des images existantes fournies au générateur au moment du calcul ;
- les noeuds de composition codent des opérations atomiques utilisant zéro, un ou plusieurs noeuds en entrée. Chaque noeud de composition est l'instance d'un type d'opération atomique de filtrage prédéterminé. L'ensemble des types des opérations atomiques est connu et implémenté par le générateur ;
- les noeuds de sortie désignent les résultats du calcul que l'utilisateur désire obtenir.

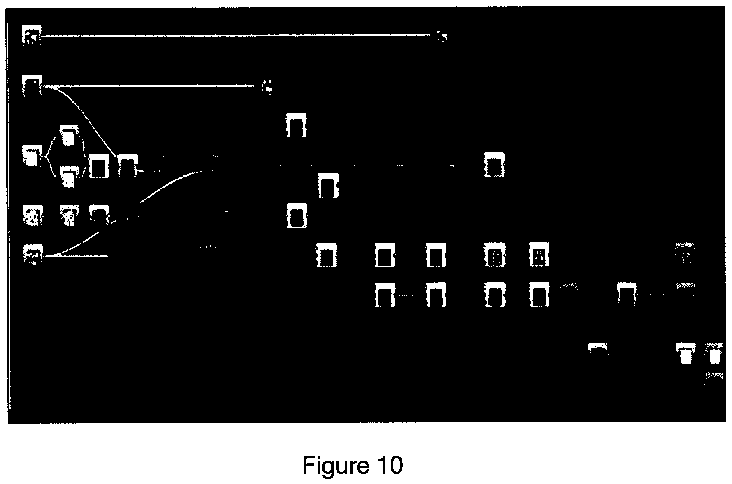

Un exemple de graphe obéissant à cette structure est donné à la figure 10. Sur cette figure, on peut identifier :
- les cinq noeuds d'entrée qui ne prennent aucune image en entrée et qui génèrent des images utilisées par les filtres en aval ;
- les quatre noeuds de sortie qui fournissent non pas une image intermédiaire à destination d'autres filtres, mais les images résultats du graphe à destination de l'application hôte ;
- les noeuds intermédiaires qui consomment une ou des images intermédiaires et qui génèrent également une ou des images intermédiaires.

Les images consommées et générées peuvent être de deux types différents : images couleur utilisant les canaux RGBA (rouge / vert / bleu / opacité) ou images noir et blanc ne stockant qu'un seul canal de luminance. Les entrées des noeuds de compositions représentent les images utilisées par l'opération atomique : leur nombre et le nombre de canaux de chacun est déterminé par le type de l'opération atomique. Les noeuds de composition ont une (ou plusieurs) sortie(s), représentant l'image résultat de l'opération et possédant un nombre de canaux déterminé par le type de l'opération atomique.

Les sorties des noeuds de composition et des noeuds d'entrée peuvent êtres connectés à un nombre quelconque d'entrées des noeuds de composition ou de sortie. Une entrée peut être connectée uniquement à une seule sortie. Une arête est valide uniquement si elle ne crée pas de cycle dans le graphe et si le nombre de canaux de l'entrée est égal à celui de la sortie.

La définition de la « grammaire » utilisable par le graphe et le choix des filtres sont des éléments primordiaux qui conditionnent d'une part la complexité et l'efficacité du processus de génération et d'autre part l'expressivité de la technologie elle-même, et donc la variété des résultats qu'il est possible de produire.

Les filtres sont classés en quatre catégories principales :
- « Impulse » : les filtres « impulse » positionnent de nombreux éléments de texture à différentes échelles et selon des motifs directement programmables par l'utilisateur.
- « Vector » : les filtres « vector » produisent des images à partir d'une représentation vectorielle compacte, par exemple sous forme de polygones ou de courbes (éventuellement colorés).
- « Raster » : les filtres « raster » travaillent directement sur les pixels. Ces filtres effectuent des opérations telles que distorsions, flous, changements colorimétriques, transformation d'image (rotation, mise à l'échelle, ...).
- « Dynamic » : les filtres « dynamic » permettent de recevoir des images créées par l'application appelante, sous forme vectorielle ou « bitmap » (par exemple en provenance du « framebuffer » de la carte graphique) de manière à pouvoir leur appliquer une série de traitements en vue de leur modification.

La possibilité d'utiliser tous ces types complémentaires de filtres est particulièrement avantageuse car elle confère une infinité de possibilités d'utilisations et un coût minimal. La liste des filtres utilisés est indépendante de l'implémentation et peut être spécialisée en vue de la réalisation de textures d'un type particulier.

L'édition de graphes représentant des descriptions d'images générées par des traitements algorithmiques d'images d'entrée (déjà existantes ou elles-mêmes générées mathématiquement) n'est pas nécessairement aisé pour l'infographiste. En conséquence, il est nécessaire de distinguer le processus de création d'éléments de base du processus d'assemblage et de paramétrisation de ces éléments en vue de la création de textures ou de variétés de textures.

Au plus bas niveau d'abstraction, il doit être possible de construire des graphes à partir des filtres afin de réaliser des groupes de traitements génériques. Assembler des filtres et modifier la valeur de leurs paramètres va permettre à l'utilisateur de créer des blocs réutilisables et pouvant être utilisés pour réaliser une très grande variété d'effets ou de motifs de base. De plus, il doit être possible de fixer définitivement la valeur de certains paramètres, ou au contraire de les rendre « programmables ». Les paramètres programmables sont des paramètres dont la valeur est générée à partir d'autres paramètres par une fonction programmée par l'utilisateur en utilisant des fonctions mathématiques classiques. Il doit enfin être possible d'emballer le graphe ainsi assemblé et de décider quels paramètres exposer à l'utilisateur final.

A un niveau intermédiaire, l'utilisateur doit pouvoir assembler les éléments préparés à l'étape précédente en différentes couches et ainsi composer un matériau complet. De plus, il doit être possible de spécifier avec des masques quelles portions du matériau ainsi défini doivent être affectées par certains effets ou certains paramètres, afin de localiser ces variations. Les paramètres des éléments préparés précédemment peuvent être liés afin de faire varier les différentes couches d'un seul et même matériau en fonction d'une seule entrée utilisateur. Pour une texture donnée, ce sont ces derniers paramètres qui permettront de faire varier l'image résultat dans un domaine thématique donné. Ces paramètres sont alors exposés avec une signification relative au domaine de la texture, comme par exemple le nombre de briques dans une direction ou dans une autre pour une texture de mur de briques.

Enfin, à un haut niveau d'abstraction, il doit être possible de générer différentes variétés d'une même texture afin de peupler un domaine thématique donné. Il est aussi possible d'affiner le résultat final en appliquant divers post-traitements colorimétriques par exemple.

Il est important de noter que l'éditeur ne produit qu'un unique graphe de génération contenant l'ensemble des textures résultats. Comme décrit plus loin, ceci permet de maximiser la réutilisation des ressources. Il est important de noter également que l'éditeur manipule le même ensemble de données (graphe et paramètres) dans ces différents modes d'utilisation. Seule les différentes façons dont les données sont exposées et les possibilités d'interaction et de modification de ces données sont affectées par le mode d'utilisation courant.

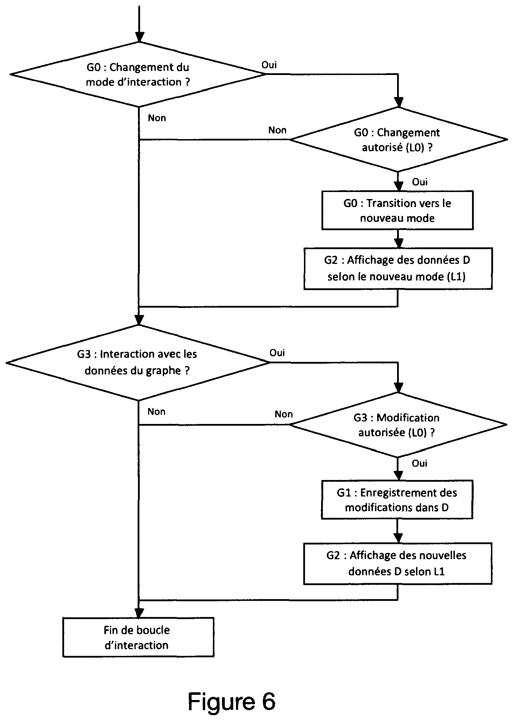

Le graphe de textures pourrait être directement utilisé par le moteur de génération des images (voir figure 6), qui le parcourrait dans l'ordre des opérations (ordre topologique). Chaque noeud générerait ainsi la ou les images nécessaires aux noeuds suivants, jusqu'à ce que les noeuds produisant les images de sortie soient atteints. Cependant, cette approche se révélerait peu efficace en termes de consommation mémoire. En effet, plusieurs ordres de parcours sont généralement possibles dans le graphe, certains utilisant plus de mémoire que d'autres du fait du nombre de résultats intermédiaires à stocker préalablement au calcul des noeuds consommant plusieurs entrées. Il est également possible d'accélérer la génération des images résultats si l'on dispose de connaissances a priori sur son déroulement. Il est donc nécessaire de procéder à une étape de préparation du graphe d'édition afin de créer une représentation que le moteur de rendu pourra consommer plus rapidement que la représentation non-préparée.

Ce composant est responsable de la réécriture du graphe sous la forme d'une liste dont le parcours est trivial pour le moteur de rendu. Cette liste doit être ordonnée de manière à minimiser la consommation mémoire lors de la génération des images résultats. De plus, des opérations d'optimisation sont nécessaires afin de fournir au moteur de rendu la représentation de taille minimale qui permet de générer les images résultats :
- optimisation des fonctions utilisées pour fixer la valeur certains paramètres à partir des valeurs d'un ensemble d'autres paramètres ;
- élimination des parties non-connectées ou inactives du graphe de par la valeur des paramètres dont la valeur est connue lors du processus de préparation ;
- identification de la précision à laquelle les calculs des filtres doivent être effectués pour conserver la pertinence de leurs résultats et ne pas introduire d'erreur visible, en fonction d'un seuil paramétrable ;
- identification et indication des dépendances entre les paramètres exposés à l'utilisateur et les images de sortie affectées par ces paramètres ;
- identification des zones des images d'entrées utilisées par les noeuds de composition, afin de ne générer que les parties d'images véritablement utilisées au final par les images de sortie.

Une fois ce processus effectué, la génération des images ne requiert pas d'autres calculs que les traitements utiles effectués en chaque noeud. La complexité est ainsi déportée dans le processus de préparation plutôt qu'à la génération des images. Ceci permet de générer les images rapidement, notamment dans des situations où les contraintes de temps et d'occupation mémoire sont très fortes, comme par exemple lorsque les images sont utilisées comme textures dans un jeu vidéo.

L'invention proposée stocke les images non pas sous la forme de grilles de pixels dont on noterait la couleur ou l'intensité lumineuse, mais sous la forme de descriptions ordonnées des calculs à effectuer et des paramètres influant sur le déroulement de ces calculs pour arriver à l'image résultat. Ces descriptions sont issues de graphes décrivant les sources utilisées (bruits, motifs calculés, images déjà existantes), les calculs de composition combinant ces sources afin de créer des images intermédiaires et finalement les images de sorties désirées par l'utilisateur. La plupart du temps, la contrainte que devra satisfaire le moteur de rendu est celle du temps de génération des images résultats. En effet, lorsqu'une application hôte désire utiliser une image décrite sous la forme de graphe retravaillé, elle désire disposer de cette image le plus rapidement possible. Un second critère est la consommation mémoire maximale durant le processus de génération.

Il a été expliqué précédemment que les graphes d'édition manipulés par l'utilisateur sont retravaillés par un composant spécifique afin de satisfaire autant que possible les deux contraintes ci-dessus. En effet, il est nécessaire de limiter au maximum la complexité du moteur de rendu afin d'en accélérer l'exécution. Une fois la description sous forme de graphe linéarisé mise à la disposition du moteur de rendu, celui-ci va effectuer les calculs dans l'ordre indiqué par le composant de préparation de graphe, en respectant les contraintes de stockage des résultats temporaires que le composant de préparation a insérées dans la liste de calculs, ceci afin de garantir la correction du calcul des noeuds consommant plus d'une entrée.

Ce moteur de rendu fait naturellement partie de l'outil d'édition, qui doit offrir aux utilisateurs un rendu visuel des manipulations qu'ils sont en train d'effectuer, mais peut aussi être embarqué dans des applications séparées, qui peuvent ainsi reproduire les images résultats uniquement à partir des fichiers de descriptions retravaillées.

L'ensemble de filtres selon l'invention est le résultat d'un compromis délicat entre facilité d'édition et efficacité de stockage et de génération. Une implémentation possible de l'invention proposée est décrite ci-après. Les catégories « impulse », « vector » et « dynamic » ne contiennent chacune qu'un filtre très générique, respectivement les filtres « FXMaps », « Vector Graphics » et « Dynamic Bitmap Input ». Seule la catégorie « raster » contient plusieurs filtres plus spécialisés, dont la liste est la suivante : Uniform Color, Blend, HSL, Channels Shuffle, Gradient Map, Grayscale Conversion, Levels, Emboss, Blur, Motion Blur, Directional Motion Blur, Warp, Directional Warp, Sharpen, 2D Transformation.

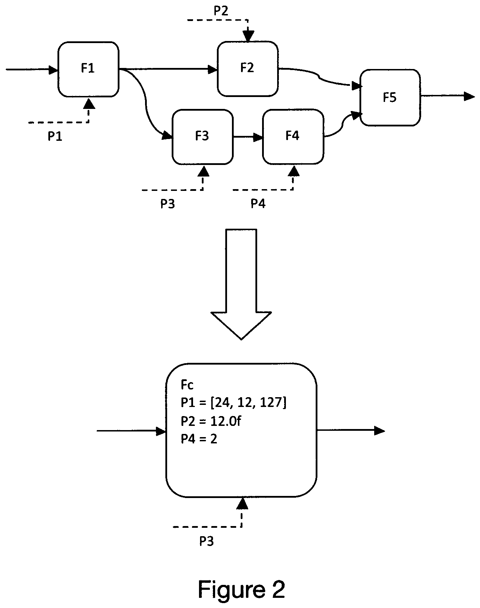

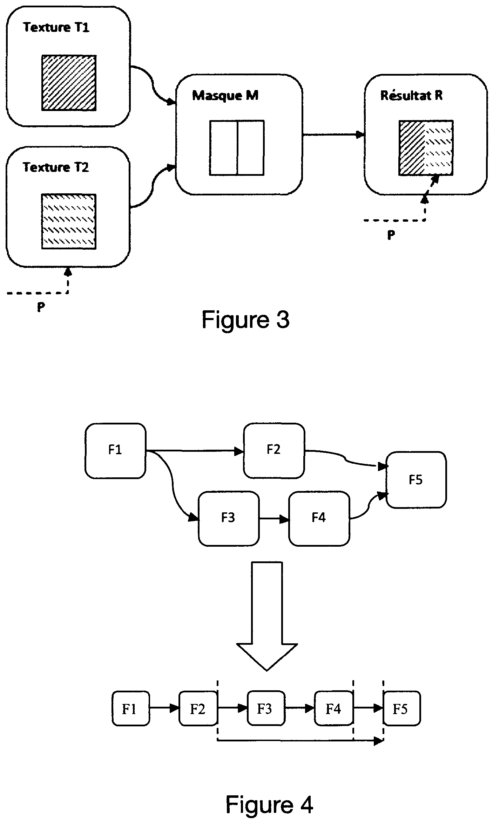

L'outil d'édition proposé par la présente invention expose trois niveaux d'utilisation à destination de trois publics différents :
- Mode d'édition technique : dans ce mode, l'outil d'édition permet de préparer des graphes de texture génériques qui sont réutilisables et paramétrables en manipulant directement le graphe, les filtres et leurs paramètres. Lorsqu'un groupe de filtres réalise le traitement voulu, l'éditeur permet de présenter le graphe entier ou une sous-partie dudit graphe sous forme de filtres avec de nouveaux jeux de paramètres. Par exemple il produira des textures de matériaux uniformes ou des motifs basiques. Les paramètres de chaque bloc (filtre originel ou ensemble de filtre) sont tous disponibles à l'édition. Lors de l'assemblage d'un sous-graphe en vue de sa réutilisation, il est possible de fixer la valeur de certains paramètres ou au contraire de les exposer à l'utilisateur. La réexposition des paramètres générés est illustrée à la figure 2. Sur cette figure, le graphe contenant les filtres F1 à F5 pilotés par les paramètres P1 à P4 est réduit et présenté comme un filtre composite Fc. Les valeurs des paramètres P1, P2 et P4 ont été fixées à leurs valeurs définitives (une couleur, un flottant et un entier), et le paramètre P3 est réexposé à l'utilisateur.
- Mode d'édition de texture : dans ce mode, l'outil d'édition permet de créer les textures finales (images résultats), en utilisant les blocs préparés en mode d'édition technique, et les combine à l'aide des filtres. Il prépare des paramètres de haut niveau, facilement manipulables par un non-expert (taille des briques d'un mur, coefficient de vieillissement d'une peinture, etc.). L'interface utilisateur spécialisée pour ce mode lui permet également de dessiner simplement des masques indiquant quelles régions de la texture finale seront composées de tel ou tel matériau. Un mécanisme de pile de calques permet également de manipuler les différentes couches de matériaux composant la texture afin de localiser certains traitements ou certaines variations. Un exemple d'opération de masquage à partir de deux graphes-textures et d'un masque dessiné par l'utilisateur est donné à la figure 3. Sur cet exemple, seule la texture T2 est affectée par le paramètre P. Après composition des textures T1 et T2 à l'aide du masque M, seule la partie du résultat R provenant de T2 est affectée par le paramètre P.
- Mode de réglage et sauvegarde : dans ce mode, l'outil d'édition permet de manipuler les paramètres de haut niveau pour appliquer les textures dans l'environnement. Il ne crée pas de nouvelle description de texture, mais en change simplement les paramètres pour produire la variation qui lui convient. L'interface utilisateur de l'éditeur spécialisée pour ce mode est donc simplifiée à l'extrême, permettant de régler de manière fine les paramètres de haut niveau des textures créées par les modes précédents, et éventuellement de finaliser la texture par quelques post-traitements simples (réglages colorimétriques, netteté, etc.).

L'invention introduit également un nouveau composant, l'optimiseur, qui transforme le graphe de génération et effectue un certain nombre de manipulations pour préparer, faciliter et accélérer la génération des images résultats par le moteur de rendu :
- Linéarisation du graphe : le graphe d'édition est transformé en liste linéaire afin de minimiser la complexité du processus de génération d'images. Ce processus de linéarisation tient compte des contraintes mémoire associées au processus de génération, et est basé sur la comparaison de divers tris topologiques du graphe générés aléatoirement. Le critère utilisé pour comparer ces tris topologiques est l'occupation mémoire maximum lors de la génération, que l'algorithme de comparaison va tenter de minimiser. Un exemple de ce processus de linéarisation du graphe est représenté à la figure 4.
- Suppression des parties non-connectées ou inactives du graphe. Les noeuds présents dans le graphe d'édition mais dont les sorties ne sont pas connectées à des branches générant les images résultats du graphe ne sont pas pris en compte lors de la transformation du graphe. De la même manière, une branche du graphe aboutissant à un résultat intermédiaire qui ne contribue pas aux images de sortie du graphe sera ignorée lors de la transformation du graphe. Ce second cas de figure peut se produire lors de la composition de deux images intermédiaires avec un masque dégénéré qui ne fait ressortir qu'une seule des deux images (ce qui permet d'ignorer l'autre et la branche du graphe qui y mène), ou d'une transformation colorimétrique avec des paramètres dégénérés, comme une opacité nulle par exemple.
- Identification des successions de filtres potentiellement compactables en un seul filtre. Ainsi, deux rotations effectuées séquentiellement avec des angles différents peuvent être remplacées par une seule rotation d'angle égal à la somme des angles des deux rotations existantes. Cette identification et cette simplification du graphe permettent de diminuer le nombre de filtres à calculer lors de la génération et donc de diminuer la durée du processus de génération.
- Evaluation de la précision avec laquelle doivent être calculés certains noeuds afin de ne pas introduire d'erreur visuellement perceptible, ou de minimiser cette erreur. Pour les filtres pouvant être calculés avec des nombres entiers à la place des nombres flottants, l'optimiseur peut évaluer l'erreur qui serait introduite par ce mode de calcul, et décider de quelle variante du filtre privilégier. Les nombres entiers sont souvent plus rapides à manipuler que les nombres flottants, mais peuvent introduire une perte de précision dans les résultats des calculs. De même, il existe des nombres flottants « simple précision » et des nombres flottants « double précision », qui prennent plus de place en mémoire et qui sont plus lents à manipuler, mais qui garantissent une plus grande précision des résultats. L'optimiseur peut ainsi décider de quelle précision adopter pour un noeud ou pour une branche du graphe en fonction par exemple du poids que va avoir l'image de sortie de ce noeud ou de cette branche dans des calculs ultérieurs. Si ce poids dépend de paramètres dont la valeur est connue par l'optimiseur lors de la préparation du graphe, alors il est possible d'orienter les calculs vers une précision ou une autre, en fonction d'un seuil d'erreur tolérable éventuellement fixé par l'utilisateur.
- Optimisation des fonctions arithmétiques définies par l'utilisateur pour asservir la valeur de certains paramètres de filtres à des paramètres « haut niveau » reliés au domaine thématique de la texture. Les optimisations utilisées relèvent par exemple de la propagation de constantes, ou encore de la factorisation de code commun à plusieurs sous-expressions, et ne sont pas un caractère discriminant de l'invention proposée. C'est l'utilisation de ces techniques sur les fonctions définies par l'utilisateur qui est notable.
- Identification des interdépendances entre les paramètres exposés à l'utilisateur et les images de sortie. Chaque noeud situé en aval d'un paramètre est marqué comme dépendant de ce dernier. Pour les images de sortie on obtient ainsi la liste des paramètres qui influencent potentiellement l'apparence de l'image, et pour chaque paramètre, la liste des images intermédiaires et des images de sortie impactées. Afin de regénérer les images le plus rapidement possible lorsque ces paramètres sont modifiés, la liste de toutes les images intermédiaires utilisées par une image de sortie et affectées par un changement de la valeur d'un paramètre exposé à l'utilisateur est stockée à part entière. De cette manière, le moteur de rendu n'a pas à procéder lui-même à cette identification potentiellement coûteuse et peut se contenter de consommer la liste préparée par l'optimiseur à cet effet, ce qui accélère le temps de génération des nouvelles images résultats correspondant à la nouvelle valeur du paramètre fourni par l'application hôte.
- Identification et propagation des sous-parties des images intermédiaires utilisées par les noeuds ne consommant qu'une partie de leur(s) image(s) d'entrée. Certains noeuds n'utilisent qu'une sous-partie des images d'entrée. Il est donc possible de ne générer que cette sous-partie sans changer le résultat final. La connaissance des paramètres déterminant les régions utilisées permet à l'optimiseur de déterminer quelles sous-parties des images de tous les noeuds sont effectivement utiles. Cette information est stockée pour chaque noeud, ce qui permet lorsque les paramètres le permettent d'effectuer uniquement le calcul de ces sous-parties.

De nombreuses implémentations du composant optimiseur sont possibles, incluant tout ou partie des fonctions mentionnées ci-dessus.

La sortie du processus d'optimisation est composée de :
- la liste et la description des entrées et sorties du graphe ;
- la liste et la description des valeurs numériques utilisées par les expressions arithmétiques des paramètres dynamiques ;
- la liste des noeuds de composition, ainsi que pour chacun d'eux :
   - le type d'opération atomique utilisée ;
   - la valeur de chacun des paramètres numériques (valeur connue ou exprimée sous la forme d'une expression arithmétique définie par l'utilisateur et interprétée par le moteur de génération) ;
   - la (ou les) région(s) de l'image de sortie à calculer ;
   - la liste des paramètres utilisateur influant sur le résultat du noeud.
- la liste des arêtes du graphe ;
- l'ordonnancement optimal des noeuds de composition (graphe linéarisé) ;
- potentiellement d'autres informations d'optimisation pouvant être utilisées pour accélérer le processus de génération.
Ces données sont sauvegardées dans un format binaire adapté pour obtenir un fichier compact et rapide à relire au moment de la génération.

Le moteur de rendu est responsable de l'exécution ordonnée des calculs présents dans la liste issue de l'optimiseur. Les noeuds de calcul contenus dans la liste issue de l'optimiseur peuvent correspondre aux noeuds du graphe d'édition, à un sous-ensemble de noeuds du graphe d'édition réduit en un seul noeud, ou encore à un noeud « implicite » inexistant dans le graphe originel mais nécessaire pour assurer un flot de données cohérent (conversion d'images couleur en images noir et blanc ou vice-versa par exemple).

Le moteur embarque de manière statique le programme à exécuter pour chaque filtre de la grammaire décrite plus haut, et va pour chaque calcul inséré dans la liste :
- lire les paramètres à utiliser pour le calcul en question quand les valeurs sont fixes ;
- évaluer les fonctions utilisateur pour calculer la valeur des paramètres non fixes ;
- récupérer les emplacements en mémoire des résultats intermédiaires à consommer pour le calcul du noeud courant ;
- effectuer le calcul du noeud courant ;
- stocker l'image résultat en mémoire.

Une fois arrivé au bout de la liste pour une image résultat donnée, le moteur de rendu va confier l'image en question à l'application hôte afin que cette dernière puisse l'utiliser.

La complexité du composant de rendu est diminuée de manière significative par la présence de l'optimiseur qui se charge en amont du plus grand nombre possible d'étapes mettant en oeuvre des traitements de forte complexité algorithmique : linéarisation du graphe, détection des sous-graphes inactifs, optimisation des fonctions utilisateurs...

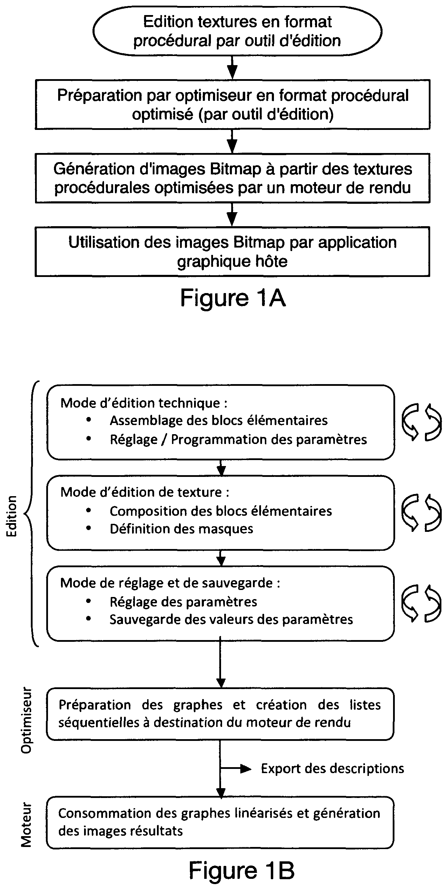

Le procédé global mis en oeuvre par les différents composants de l'invention proposée est illustré aux figures 1A et 1 B. Les différentes étapes sont :
I. Assemblage de filtres en blocs réutilisables et réglage / programmation des paramètres des filtres ;
II. Composition des textures à l'aide des blocs réutilisables / ajustement des valeurs des paramètres exposés / dessin des masques et « régionalisation » des effets appliqués ;
III. Réglage des derniers paramètres exposés / sauvegarde des lots de valeurs utilisées
IV. Export des graphes retravaillés par l'optimiseur/ sauvegarde des fichiers de description ;
V. Génération des images résultats par le moteur de rendu.

Au sein de l'outil d'édition, il est fréquent d'effectuer de nombreuses itérations des étapes I à III afin d'obtenir le rendu graphique souhaité. De plus, les étapes IV et V sont exécutées à chaque manipulation de l'utilisateur, afin d'offrir un rendu visuel de l'impact des modifications effectuées.

L'étape IV est le point auquel l'outil d'édition et les éventuelles applications hôtes peuvent être dissociées. Les fichiers de descriptions créés par l'optimiseur à partir des graphes d'édition sont les seules données qui sont nécessaires à l'application hôte pour recréer les images conçues par les utilisateurs de l'outil d'édition.

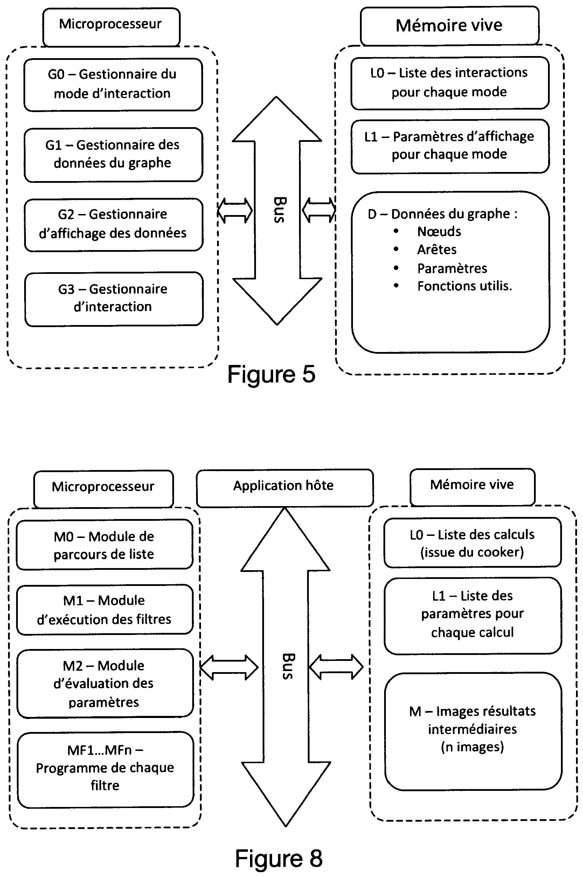

L'outil d'édition de l'invention proposée est implémenté sur un dispositif comportant un microprocesseur (CPU) raccordé à une mémoire vive par un bus. Un exemple d'implémentation de ce dispositif est illustré à la figure 5.

La mémoire vive comporte les régions suivantes :
- une mémoire L0 contenant la description des différents modes d'interaction. Cette mémoire contient la liste des interactions autorisées pour chaque mode d'utilisation, ainsi que la liste des transitions possibles entre les différents modes d'interaction ;
- une mémoire L1 contenant la description de l'affichage des données pour chaque mode d'interaction. Cette mémoire contient par exemple la description de l'affichage des différents calques et des différentes couches pour le mode d'affichage de niveau intermédiaire mentionné plus haut, ou la description de l'affichage du graphe pour le mode d'affichage de plus bas niveau ;
- une mémoire D contenant toutes les données du graphe : noeuds et arêtes, type d'opérations pour chaque noeud, fonctions utilisateurs définies pour l'asservissement de certains paramètres, liste des images d'entrée et des images de sortie, ...

Les différents modules suivants sont hébergés par le microprocesseur :
- un gestionnaire G0 du mode d'interaction, qui en fonction du mode d'utilisation courant et des transitions possibles listées dans L0, va déclencher le passage d'un mode d'édition à un autre ;
- un gestionnaire G1 des données du graphe, qui va répercuter sur les données D du graphe stockées en mémoire les modifications effectuées par l'utilisateur sur un élément quelconque du graphe : topologie du graphe (noeuds et arêtes), fonctions utilisateurs, paramètres des noeuds... Les modifications des données du graphe dépendent du mode d'interaction courant ;
- un gestionnaire G2 d'affichage des données, qui va construire la représentation du graphe en cours d'édition à partir des données D, en fonction du mode d'interaction courant et des paramètres d'affichage à employer pour le mode d'interaction courant, contenus dans L1 ;
- un gestionnaire G3 d'interaction qui va autoriser ou non les modifications effectuées par l'utilisateur en fonction du mode d'édition courant et de la liste des interactions autorisées contenu dans L0.

Ce dispositif assure les fonctions d'édition multi modes détaillées ci-dessus, en permettant aux utilisateurs d'éditer le même jeu de données selon différents modes exposant chacun un ensemble d'interactions possibles. La figure 6 présente quelques-unes des étapes d'une approche selon laquelle ces différents modes d'interaction peuvent être gérés.

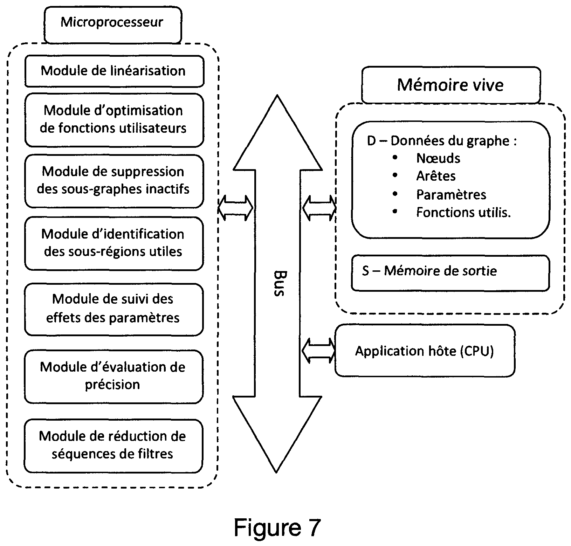

L'outil de préparation de graphe de l'invention proposée (l'optimiseur) est implémenté sur un dispositif comportant un microprocesseur (CPU) raccordé à une mémoire vive par un bus. Ce dispositif est illustré à la figure 7.

La mémoire vive contient les régions suivantes :
- une région D contenant toutes les informations du graphe après sa manipulation par l'utilisateur :
- les noeuds et arêtes du graphe ;
- les paramètres de chaque noeud ;
- les fonctions utilisateurs utilisées pour calculer la valeur de certains paramètres de noeud à partir des valeurs d'autres paramètres ;
- une région S destinée à recevoir la description du graphe transformé en liste ordonnée de noeuds annotés.

Les différents modules suivants sont hébergés par le microprocesseur :
- un module de linéarisation de graphe ;
- un module d'optimisation de fonctions utilisateurs ;
- un module de suppression des sous graphes non connectés ou inactifs ;
- un module d'identification des sous-régions à calculer pour chaque noeud ;
- un module de suivi des effets des paramètres ;
- un module d'évaluation de la précision à laquelle chaque filtre peut être calculé ;
- un module d'identification et de réduction des séquences de filtres.

Lors de l'optimisation d'un graphe issu de l'outil d'édition, tout ou partie des différents modules de l'optimiseur sont activés pour traiter les données du graphe contenues dans la mémoire D. La représentation sous forme de graphe séquentiel linéarisé est stockée dans la mémoire S, afin d'être utilisée immédiatement par l'application hôte ou d'être stockée dans un fichier.

Le moteur de rendu de l'implémentation proposée est implémenté sur un dispositif comportant un microprocesseur (CPU) raccordé à une mémoire vive par un bus. Ce dispositif est illustré à la figure 8.

La mémoire vive contient les régions suivantes :
- une région L0 contenant la liste issue de l'optimiseur (graphe linéarisé). Cette liste peut soit provenir directement de l'optimiseur dans le cas où l'optimiseur et le moteur de rendu sont inclus dans la même application (cas de l'outil d'édition par exemple), soit provenir d'un fichier de ressource embarqué dans l'application hôte et confié au moteur pour la regénération des images résultats préalablement à leur utilisation (en général dans un environnement graphique) ;
- une région L1 ordonnée selon les calculs présents dans L0, et contenant les valeurs des paramètres à utiliser pour chaque calcul. Pour les paramètres décrits sous la forme d'expressions arithmétiques, les expressions à évaluer sont également stockées dans cette liste ;
- une région M contenant les résultats intermédiaires calculés lors du parcours de la liste. Cette mémoire est en particulier utilisée pour stocker les résultats intermédiaires à conserver lors du calcul de filtres consommant plus d'une seule entrée. Les images de sortie sont également stockées dans cette mémoire avant d'être mises à disposition de l'application hôte.

Le microprocesseur héberge les modules suivants :
- un module M0 de parcours de liste, qui va parcourir la liste contenue dans L0 et lire les paramètres associés dans L1 ;
- un module M1 qui est chargé de l'utilisation des valeurs correctes pour chaque paramètre de chaque filtre et de l'exécution du code des filtres présents dans la liste L0 ;
- un module M2 d'évaluation des fonctions utilisateurs, mis en oeuvre lorsque les paramètres n'ont pas une valeur fixe et déjà présente dans la liste du fait du processus de préparation. C'est ce module qui va procéder à la lecture des expressions arithmétiques définies par l'utilisateur et à l'évaluation de ces fonctions afin de produire les valeurs des paramètres à utiliser lors de l'exécution de chaque filtre ;
- une liste de modules MF1 à MFn, contenant chacun le code à exécuter pour un filtre donné. C'est dans cette liste de modules que le module M1 va identifier le filtre à exécuter correspondant à une position particulière dans la liste L0.

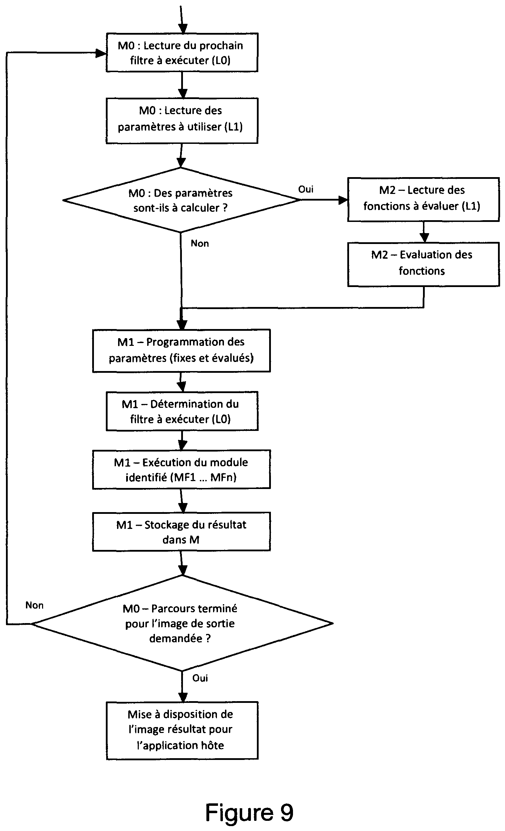

La figure 9 montre les étapes clés du parcours des listes produites par l'optimiseur à partir des graphes d'édition par le moteur de rendu.

L'implémentation proposée de l'invention utilise un certain nombre de catégories de filtres, comprenant chacune un certain nombre de filtres. La grammaire ainsi constituée est spécifique à une implémentation, et a été définie de manière à obtenir un compromis satisfaisant entre l'expressivité de ladite grammaire et la complexité du processus de génération des images à partir des graphes retravaillés. Il est tout à fait possible d'envisager des découpages différents, avec des catégories différentes et une autre sélection de filtres, dérivée ou complètement disjointe de la sélection de filtres utilisée dans l'implémentation présentée. Les grammaires potentielles doivent être connues du moteur de rendu, qui doit alors être capable d'exécuter les calculs associés à chaque filtre utilisé ou de convertir les filtres présents dans la grammaire utilisée en filtres ou successions de filtres équivalents, afin de garantir la correction de l'image résultat.

Dans l'implémentation proposée de l'invention, l'outil de création et d'édition de graphes expose trois modes d'utilisation exposant différents niveaux de complexité afin d'être utilisés par trois types d'utilisateur différents. Il est possible d'envisager un nombre différent de modes d'utilisation de l'outil d'édition, et ainsi de découper différemment la base d'utilisateurs de l'outil.

La mise en oeuvre des différents modules préalablement décrits (par exemple les modules de linéarisation, de suivi, de parcours de listes, d'exécution des filtres, d'évaluation des paramètres, etc) est avantageusement réalisée au moyen d'instructions de mise en oeuvre, permettant aux modules d'effectuer la ou les opérations spécifiquement prévues pour le module concerné. Les instructions peuvent être sous la forme d'un ou plusieurs logiciels ou modules de logiciels mis en oeuvre par un ou plusieurs microprocesseurs. Le ou les modules et/ou le ou les logiciels sont avantageusement prévus dans un produit programme d'ordinateur comprenant un support d'enregistrement ou medium d'enregistrement utilisable par un ordinateur et comportant un code programmé lisible par un ordinateur intégré dans ledit support ou medium, permettant à un logiciel applicatif son exécution sur un ordinateur ou autre dispositif comportant un microprocesseur.

## Revendications

1. Système d'édition et de génération de textures procédurales comprenant au moins un microprocesseur, une mémoire et une liste d'instructions permettant aux modules d'effectuer la ou les opérations spécifiquement prévues pour le module concerné, et permettant d'éditer des textures en format procédural sous la forme de descriptions ordonnées des calculs à effectuer et des paramètres influant sur le déroulement de ces calculs pour arriver à l'image résultat, à partir de données de graphe dont chaque noeud applique une opération sur une ou plusieurs images d'entrées pour produire une ou plusieurs images de sorties et, à partir des données procédurales éditées, de générer des textures en format matriciel, ledit système comprenant :
- un outil d'édition, adapté pour fournir une interface utilisateur permettant de créer ou modifier des textures en format procédural et comportant un optimiseur de rendu des textures à générer ;
- un moteur de rendu, adapté pour générer des textures matricielles à partir des données de graphes en format procédural optimisé issues d'un dispositif d'optimisation, et comprenant un module M0 de parcours de liste de paramètres du graphe à traiter, un module M1 d'exécution des filtres, un module M2 d'évaluation des paramètres du graphe et un module de filtres, comportant les données à exécuter pour chacun des filtres ;
**caractérisé en ce que** :
l'optimiseur de rendu est adapté pour la génération d'un graphe d'édition sous la forme d'une liste dont le parcours est trivial pour le moteur de rendu, cette liste étant ordonnée de manière à minimiser la consommation mémoire lors de la génération des images résultats, la mémoire de l'optimiseur contenant les régions suivantes :
- une région D contenant toutes les informations du graphe après sa manipulation par l'utilisateur :
- les noeuds et arêtes du graphe ;
- les paramètres de chaque noeud ;
- les fonctions utilisateurs utilisées pour calculer la valeur de certains paramètres de noeud à partir des valeurs d'autres paramètres ;
- une région S destinée à recevoir la description du graphe transformé en liste ordonnée de noeuds annotés ;
et **en ce que** l'optimiseur comporte par ailleurs les modules suivants :
- un module de linéarisation de graphe ;
- un module d'optimisation de fonctions utilisateurs ;
- un module de suppression des sous graphes non connectés ou inactifs ;
- un module d'identification des sous-régions à calculer pour chaque noeud ;
- un module de suivi des effets des paramètres du graphe ;
- un module d'évaluation de la précision à laquelle chaque filtre peut être calculé ;
- un module d'identification et de réduction des séquences de filtres.

2. Système d'édition et de génération de textures procédurales selon la revendication 1, dans lequel les filtres comportent au moins un filtre pour chacune des catégories suivantes :
- les filtres « impulse » positionnant de nombreux éléments de texture à différentes échelles et selon des motifs directement programmables par l'utilisateur ;
- les filtres « vector » produisant des images à partir d'une représentation vectorielle compacte ;
- les filtres « raster » travaillant directement sur les pixels ;
- les filtres « dynamic » permettant de recevoir des images créées par l'application appelante, sous forme vectorielle ou « bitmap » de manière à pouvoir leur appliquer une série de traitements en vue de leur modification.

3. Procédé d'édition de textures procédurales pour système d'édition et de génération de textures permettant d'éditer des textures en format procédural sous la forme de descriptions ordonnées des calculs à effectuer et des paramètres influant sur le déroulement de ces calculs pour arriver à l'image résultat, à partir de données de graphe dont chaque noeud applique une opération sur une ou plusieurs images d'entrées pour produire une ou plusieurs images de sorties et, à partir des données procédurales éditées, de générer des textures en format matriciel,
ledit procédé comportant des étapes :
- d'assemblage de filtres en blocs réutilisables et de réglage des paramètres des filtres ;
- de composition des textures à l'aide des blocs réutilisables, d'ajustement des valeurs des paramètres exposés et de dessin des masques avec régionalisation des effets appliqués ;
- de réglage des derniers paramètres exposés et sauvegarde des lots de valeurs utilisées ;
- d'export des graphes retravaillés par l'optimiseur et sauvegarde des fichiers de description pour permettre une génération des images résultats par le moteur de rendu.
- une linéarisation du graphe dans laquelle le graphe d'édition est transformé en liste linéaire afin de minimiser la complexité du processus de génération d'images ;
- la suppression des parties non connectées ou inactives du graphe ;
- l'identification des successions de filtres potentiellement compactables en un seul filtre ;
- l'évaluation de la précision avec laquelle doivent être calculés certains noeuds afin de ne pas introduire d'erreur visuellement perceptible, ou de minimiser cette erreur ;
- l'optimisation des fonctions arithmétiques définies par l'utilisateur pour asservir la valeur de certains paramètres de filtres à des paramètres « haut niveau » reliés au domaine thématique de la texture ;
- l'identification des interdépendances entre les paramètres exposés à l'utilisateur et les images de sortie ;
- l'identification et la propagation des sous-parties des images intermédiaires utilisées par les noeuds ne consommant qu'une partie de leur(s) image(s) d'entrée.

4. Procédé d'édition de textures procédurales selon la revendication 3, comportant les étapes consistant, pour chaque filtre concerné, à :
- parcourir la liste des données de graphes en format procédural optimisé ;
- lire, à partir de données de graphes en format procédural optimisé, les paramètres à utiliser pour le calcul pour les valeurs des paramètres fixes ;
- évaluer les fonctions utilisateur pour calculer la valeur des paramètres non fixes ;
- récupérer les emplacements en mémoire des résultats intermédiaires à consommer pour le calcul du noeud courant ;
- effectuer le calcul des données courantes de graphes en format procédural optimisé pour déterminer les données matricielles correspondantes ;
- stocker l'image résultat en mémoire ;
- et, lorsque tous les filtres concernés sont traités, mettre la texture matricielle générée à la disposition de l'application hôte.

## Patentansprüche

1. System zur Bearbeitung und Erzeugung von verfahrenstechnischen Texturen mit mindestens einem Mikroprozessor, einem Speicher und einer Liste von Anweisungen, welche den Modulen erlaubt, die für das betroffene Modul spezifisch vorgesehene(n) Operation(en) durchzuführen, und das Editieren von Texturen im verfahrenstechnischen Format in der Form von geordneten Beschreibungen von durchzuführenden Berechnungen und von den Parametern, welche einen Einfluss auf den Ablauf dieser Berechnungen ausüben, erlaubt, um das Resultatbild zu erreichen, auf der Basis von den Graphdaten, deren jeder Knoten eine Operation auf ein oder mehrere Eingabebilder, um ein oder mehrere Ausgabebilder zu erzeugen, und auf der Basis von den editierten verfahrenstechnischen Daten Texturen in Matrixformat zu erstellen, wobei das besagte System umfasst:
- ein Bearbeitungswerkzeug, welches angepasst ist, um eine Benutzerschnittstelle zu bieten, welche es erlaubt, Texturen im verfahrenstechnischen Format zu erstellen oder zu ändern, und mit einem Renderingoptimierer der zu erzeugenden Texturen;
- einen Renderer, welcher angepasst ist, um Matrixtexturen auf der Basis von den aus einer Optimisierungsvorrichtung stammenden Graphdaten im optimierten verfahrenstechnischen Format zu erzeugen, und mit einem Modul MO zum Durchsuchen einer Liste von zu verarbeitenden Graphparametern, einem Modul M1 zur Durchführung der Filter, einem Modul M2 zur Bewertung von Graphparametern und einem Filtermodul, mit durchzuführenden Daten für jeden der Filter;
**dadurch gekennzeichnet, dass**:
der Renderingoptimierer angepasst ist für die Erzeugung eines Editiergraphs in der Form einer Liste, deren Durchsuchen für den Renderer trivial ist, wobei diese Liste so geordnet ist, um den Speicherverbrauch während der Erzeugung der Resultatbilder zu minimieren, wobei der Speicher des Optimierers die folgenden Regionen umfasst:
- eine Region D mit allen Graphinformationen nach seiner Behandlung durch den Benutzer;
- die Knoten und Kanten des Graphs;
- die Parameter von jedem Knoten;
- die Benutzerfunktionen, welche für die Berechnung des Werts von gewissen Knotenparametern auf der Basis von den Werten von anderen Parametern verwendet werden;
- eine Region S, welche dazu bestimmt ist, die Beschreibung des umgewandelten Graphs in einer geordneten Liste von annotierten Knoten zu empfangen;
und dadurch, dass der Optimierer zudem die folgenden Module umfasst:
- ein Modul zur Linearisierung des Graphs;
- ein Modul zum Optimieren der Benutzerfunktionen;
- ein Modul zum Unterdrücken der nicht-verbundenen oder inaktiven Untergraphen;
- ein Modul zum Identifizieren der Unterregionen, welche für jeden Knoten zu berechnen sind;
- ein Modul zur Überwachung der Effekte der Graphparameter;
- ein Modul zur Bewertung der Genauigkeit, mit welcher jeder Filter berechnet werden kann;
- einen Modul zum Identifizieren und Reduzieren der Filtersequenzen.

2. System zur Bearbeitung und Erzeugung von verfahrenstechnischen Texturen gemäss Anspruch 1, worin die Filter mindestens einen Filter für jede der folgenden Kategorien umfassen:
- "Impuls"-Filter zur Positionierung von vielen Texturelementen in unterschiedlichen Skalen und gemäss Mustern, welche direkt durch den Benutzer programmierbar sind;
- "Vektor"-Filter, welche Bilder ab einer kompakten vektoriellen Darstellung erstellen;
- "Raster"-Filter, welche direkt an den Pixels arbeiten;
- "dynamische" Filter, welche es erlauben, durch die aufrufende Anwendung erzeugte Bilder zu empfangen, in vektorieller oder "bitmap" Form, um für ihre Modifikation eine Reihe von Verarbeitungen auf sie anwenden zu können.

3. Verfahren zur Bearbeitung von verfahrenstechnischen Texturen für System zur Bearbeitung und Erzeugung von verfahrenstechnischen Texturen, zum Editieren von Texturen im verfahrenstechnischen Format in der Form von geordneten Beschreibungen von durchzuführenden Berechnungen und von den Parametern, welche einen Einfluss auf den Ablauf dieser Berechnungen ausüben, um das Resultatbild zu erreichen, ab den Graphdaten, deren jeder Knoten eine Operation auf ein oder mehrere Eingabebilder ausführt, um ein oder mehrere Ausgabebilder zu erzeugen, und um ab den editierten verfahrenstechnischen Daten Texturen in Matrixformat zu erstellen, wobei das besagte Verfahren die folgenden Schritte umfasst:
- Zusammenbauen der Filter in wiederverwendbaren Blöcken und Einstellung der Filterparametern;
- Komposition der Texturen mittels der wiederverwendbaren Blöcke, Einstellung der Werte der aufgeführten Parametern und Zeichnen der Masken mit Regionalisierung der angewendeten Effekte;
- Anpassen der letzten bereitgestellten Parameter und Speichern der benutzten Wertchargen;
- Exportieren der durch den Optimierer widerverarbeiteten Graphen und Speichern der Beschreibungsdateien, um dem Renderer zu ermöglichen, die Resultatbilder zu generieren;
- Linearisierung des Graphs, worin der Editiergraph in eine lineare Liste umgewandelt wird, um die Komplexität des Bilderzeugungsprozesses zu minimieren;
- Entfernung der nicht-verbundenen oder inaktiven Graphteile;
- Identifizierung der Reihen von Filtern, welche potentiell zu einem einzigen Filter kompaktierbar sind;
- Bewertung der Genauigkeit, mit welcher gewisse Knoten berechnet werden müssen, um keinen visuell wahrnehmbaren Fehler einzuführen, oder um diesen Fehler zu minimieren;
- Optimierung der vom Benutzer definierten arithmetischen Funktionen, um den Wert von gewissen Filterparametern an "Hochniveau"-Parametern, welche mit dem thematischen Gebiet der Textur in Verbindung stehen, zu versklaven;
- Identifizierung der Wechselbeziehungen zwischen Parametern, welche dem Benutzer bereitgestellt werden, und den Ausgangsbildern;
- Identifizierung und Propagieren der Unterteile der Zwischenbilder, welche durch die lediglich einen Teil ihrer Eingabebilder(n) gebrauchenden Knoten verwendet werden.

4. Verfahren zur Bearbeitung von verfahrenstechnischen Texturen gemäss Anspruch 3, umfassend die folgenden Schritte, für jeden betroffenen Filter:
- Durchsuchen der Liste der Graphdaten im optimieren verfahrenstechnischen Format;
- Durchsuchen, ab Graphdaten im optimierten verfahrenstechnischen Format, der Parameter, welche für die Berechnung der Werte der festen Parameter zu verwenden sind;
- Bewertung der Benutzerfunktionen, um den Wert der nichtfestgelegten Parameter zu berechnen;
- Abrufen der Speicherstellen der zu gebrauchenden Zwischenergebnisse für die Berechnung des aktuellen Knotens;
- Berechnung der aktuellen Graphdaten im optimieren verfahrenstechnischen Format, um die entsprechenden Rasterdaten zu bestimmen;
- Speichern des resultierenden Bildes im Speicher;
- und, wenn alle relevanten Filter verarbeitet worden sind, die erzeugte Matrix-Textur der Host-Anwendung zur Verfügung stellen.

## Claims

1. A system for editing and generating procedural textures comprising at least one microprocessor, a memory and a list of instructions enabling the modules to execute the operation or operations specifically provided for the module in question, and making it possible to edit textures in procedural format in the form of ordered descriptions of the calculations to be performed and the parameters influencing the process of these calculations to obtain the result image, from graph data of which each node applies one operation on one or several input images to produce one or several output images and, from the edited procedural data, to generate textures in matrix format, wherein said system comprises:
- an editing tool adapted to provide a user interface for creating or modifying textures in procedural format and comprising a device for optimising the rendering of the textures to be generated;
- a rendering engine adapted to generate matrix textures from the graph data in optimized procedural format coming from an optimisation device, and comprising a module MO for running the list of parameters of the graph to be processed, a module M1 for executing the filters, a module M2 for evaluating the graph parameters and a filter module, including the data to be executed for each of the filters;
**characterized in that**:
the rendering optimiser is adapted for generating an edit graph in the form of a list, the running of which is trivial for the rendering engine, wherein this list is ordered so as to minimise the memory consumption during the generation of the result images, wherein the optimiser's memory comprises the following regions:
- a region D containing all the graph information after its manipulation by the user;
- the nodes and edges of the graph;
- the parameters of each node;
- the user functions used for calculating the value of certain node parameters from the values of other parameters;
- a region S designed to receive the description of the graph transformed into an ordered list of annotated nodes;
and **in that** the optimiser further comprises the following modules:
- a graph linearization module;
- a module for optimising user functions;
- a module for suppressing non-connected or inactive subgraphs;
- a module for identifying the sub-regions to be calculated for each node;
- a module for monitoring the effects of the graph parameters;
- a module for evaluating the precision with which each filter can be calculated;
- a module for identifying and reducing filter sequences.

2. System for editing and generating procedural textures according to claim 1, wherein the filters comprise at least one filter for each of the following categories:
- "pulse" filters positioning many texture elements at different scales and according to patterns directly programmable by the user;
- "vector" filters producing images from a compact vector representation;
- "raster" filters working directly on the pixels;
- "dynamic" filters for receiving images created by the calling application, in vectorial or "bitmap" form so as to be able to apply to them a series of treatments for the purpose of their modification.

3. Method for editing procedural textures for an editing and generating system for editing textures in procedural format in the form of ordered descriptions of the computations to be performed and the parameters influencing the process of these computations to obtain the result image, from graph data of which each node applies one operation on one or several input images to produce one or several output images and, from the edited procedural data, to generate textures in matrix format, wherein said method comprises the following steps:
- assembling reusable filters and blocs and adjusting filter parameters;
- composing textures using reusable blocs, adjusting the values of the parameters exposed and drawing the masks with regionalisation of the applied effects;
- adjusting the last exposed parameters and saving batches of values used;
- exporting the graphs after processing by the optimiser and saving the description files to allow the rendering engine to generate the result images;
- linearizing the graph in which the edit graph is transformed into a linear list in order to minimise the complexity of the image generation process;
- suppressing the non-connected or inactive parts of the graph;
- identifying the sequences of filters that are potentially compactable into a single filter;
- evaluating the precision with which certain nodes must be calculated in order to not introduce a visually perceptible error or in order to minimise this error;
- optimising the arithmetic functions defined by the user to enslave the value of certain filter parameters to "high level" filters connected to the thematic domain of the texture;
- identifying the interdependencies between the parameters exposed to the user and the output images;
- identifying and propagating the sub-parts of the intermediary images used by the nodes using only part of their input image(s).

4. Method for editing procedural textures according to claim 3, comprising the following steps, for each filter concerned, of:
- browsing the list of graph data in an optimized procedural format,
- reading, from graph data in optimized procedural format, the parameters to be used for the calculation for the values of the fixed parameters;
- evaluating the user functions to calculate the value of the non-fixed parameters;
- recovering the stored locations of the intermediate results to be consumed for the calculation of the current node;
- performing the calculation of the current graph data in an optimized procedural format to determine the corresponding matrix data;
- storing in memory the result image;
- and, when all the filters concerned have been processed, making the generated matrix texture available to the host application.
